# EUROPEAN PATENT SPECIFICATION

(11) **EP 3 986 658 B1**
(45) Date of publication and mention of the grant of the patent: **19.07.2023**
(21) Application number: 20739769.6
(22) Date of filing: 17.06.2020
(51) Int. Cl.: B23K 26/00, B23K 26/03, B23K 26/06, B23K 26/082, B23K 26/14, B23K 26/144, B23K 26/21, B23K 26/34, B23K 26/36, B23K 26/70

(54) **AN APPARATUS OF LASER-PROCESSING AND CORRESPONDING METHOD OF LASER-PROCESSING**
LASERBEARBEITUNGSGERÄT UND ENTSPRECHENDES VERFAHREN ZUR LASERBEARBEITUNG
APPAREIL DE TRAITEMENT AU LASER ET PROCÉDÉ CORRESPONDANT DE TRAITEMENT AU LASER

(30) Priority: 18.06.2019 IT 201900009366
(43) Date of publication of application: 27.04.2022
(73) Proprietor: Prima Industrie S.p.A., 10093 Collegno (TO) (IT)
(72) Inventor: CALEFATI, Paolo, 10093 Collegno (TO) (IT); PATRIMIA, Gaetano, 10093 Collegno (TO) (IT); VIRGILLITO, Giuseppe, 10093 Collegno (TO) (IT)
(74) Representative: Crovini, Giorgio
(86) International application number: PCT/IB2020/055648
(87) International publication number: WO 2020/254982

(56) References cited:
- WO-A1-2018/069809
- WO-A1-2018/178387
- CN-A- 105 855 549
- US-A1- 2018 229 332

## Description

### Technical field

The description relates to a laser-processing apparatus, comprising a set of at least two laser sources different from one another configured for providing respective laser beams having wavelengths different from one another, and a laser head, which can be operated as end tool of a laser machine tool that can be configured for carrying out at least one type of laser processing operation that can be selected from a set of types of laser processing operations, said laser head comprising a set of orientable optical components so as to provide a set of selectable optical paths for directing a laser beam supplied by a respective laser source of said set of at least two laser sources, and a control unit coupled to said set of at least two laser sources, to said set of orientable optical components, and to the laser head, which can be configured for carrying out at least one type of laser processing operation that can be selected from a set of types of laser processing operations, said control unit being configured for controlling said at least two laser sources, said set of orientable optical components, and said laser head according to the type of laser processing operation selected from said set of types of laser processing operations so as to carry out the type of laser processing operation selected, i.e., so as to supply and direct said laser beam associated to the respective type of processing operation onto a region of a work surface.

One or more embodiments regard a method for controlling the above laser-processing apparatus, and use of the apparatus, for example in a context of a machine tool or of an anthropomorphic robot.

### Technological background

In the field of laser processing there exist multiple systems for conveying electromagnetic radiation, which are referred to as "laser heads" and can be operated as end tools of a laser machine tool, each head being specialized for carrying out a limited number of types, usually one or two, of laser processing operations at the same time. Performing different types of processing operations with one and the same laser machine tool is possible by replacing each time a laser head specialized in a type of processing operation with another laser head specialized in the different type of processing operation that is to be carried out. However, this replacement is made at the cost of interruptions in production, thus potentially leading to very long intervals of production downtime. In fact, at each replacement of a head for a processing operation of one type with another head for a processing operation of a different type, it may be necessary to replace also a sensor cone of the head and recalibrate the machine to operate properly with the new tool installed.

In the case where the tool with which the laser head is equipped is only the laser beam, a device is known for providing a first machining tool, generated by a first source of radiation, in particular a laser source, in the form of a processing beam and at least one other machining tool of a different nature or different origin, in particular a source of radiation different from the source of radiation of the first machining tool, wherein the different machining tools can be set in contact with a workpiece so as to machine the material, and machining of the workpiece can be carried out via just one of the machining tools at each moment. A laser-processing apparatus of the type referred to above is described in the document No. US 2005/0205537 A1.

A solution which is, from certain points of view, similar is known from the document No. US 9180551 B2, which describes a laser machine tool for performing laser processing via laser ablation, which comprises a dual and mobile laser head prearranged for emission of laser beams, where said dual laser head incorporates two or more laser sources, each laser source emitting a different type of laser beam, where the two or more laser sources incorporated in the dual laser head are not able to carry out simultaneously processing of a workpiece.

However, the above solutions can facilitate reduction of production down times only in the case of laser processing operations that use only the laser beam for carrying out processing. In some specific laser processing operations, such as direct-energy-deposition (DED) additive manufacturing, cladding, or (wire or powder) welding - just to cite a few examples -, nozzles are moreover used for supplying material to be directed onto a work surface together with the laser beam, for example filiform metal material in the case of wire or powder welding in the case of additive manufacturing.

There hence exists the problem of providing a laser-processing apparatus comprising a set of processing operations that include the use not only of a laser beam but also of other tools, in particular nozzles for directing materials onto the work surface.

In the field of laser-processing apparatuses of the DED additive-manufacturing type there exist solutions that use two heads, each equipped with nozzles and corresponding laser, either as replacement of one another or operating in parallel, which can facilitate processing operations of a DED type with varying characteristics. This solution presents, however, the disadvantage that the object obtained presents traces having different thicknesses set alongside and on top of one another, which leads to an increase in porosity of the object produced since it is easier for there to remain gaps in the object, for example gaps of a size given by the difference between the different thicknesses.

Use of multiple laser heads moreover also increases the costs, with a consequent increase in the investments necessary for the production line and consequently in the costs for manufacture of the objects.

Moreover, in the case where laser beams having different characteristics and different powers are used as laser processing tools, there arises the problem of maintaining good optical performance: if an optical system is used with a coating for a wavelength of for example 1070 nm during processing using a laser at a different wavelength, the quality of the processing might not meet requirements.

Furthermore, conventional additive-manufacturing apparatuses may use a frame provided with nozzles, which may limit the freedom of manoeuvre of the head for direction of the laser beam onto the work surface. Moreover, this type of limitation in the freedom of movement may render more problematical production of some parts, for example on account of the encumbrance of the frame.

Notwithstanding the vast activity in this area, as witnessed, for example, by the various documents listed previously, further improved solutions are desirable.

Documents US 2018/229332 A1 (describing all the features defined in the preamble of claim 1),

WO 2018/178387 A1, WO 2018/069809 A1 are also pertinent to the technological background of the solution described herein.

### Object of the invention

The object of the embodiments described herein is to improve apparatuses and methods according to the prior art, as discussed previously.

A further object of the invention is to propose a laser-processing apparatus, and a method for controlling the apparatus itself, which will:
- facilitate creation of a single multi-functional work centre, for example comprising additive and subtractive processing operations, in which the down times between one processing operation and another are reduced, so as to facilitate a high productivity;
- present a laser head that carries out in a flexible way one or more types of laser processing operations, for example in one and the same sequence, without there being down times, for example to replace a sensor cone, which remains the same for each processing operation;
- provide a modular solution, comprising a set of modules that can be varied in a flexible way on the basis of the production requirements; and
- speed up the manufacturing process, in particular in the case of production of massive pieces, thanks to the possibility of increasing an aperture section of diaphragms in the nozzles for deposition of the powder, or also of improving the precision in the case where the aim is to achieve higher resolutions on the workpiece, thus reducing the section of the diaphragm.

### Summary of the invention

An aim of one or more embodiments is to contribute to providing such an improved solution.

Various embodiments achieve one or more of the aforesaid objects thanks to a laser-processing apparatus and to a corresponding method, having the characteristics defined in the claims 1 and 14.

In particular, the object of the invention is an apparatus as defined in claim 1, and having the characteristics referred to at the start of this description, wherein:
said laser head comprises a set of nozzles configured for being controlled to direct at least one processing material onto said region of a work surface, said set of nozzles comprising at least one nozzle configured for directing in a controlled way jets of powder of at least one material, preferably metal powder, as well as comprising at least one of the following:
   a) a first nozzle configured for directing in a controlled way a metal wire onto said region of a work surface, preferably metal wire for laser welding; and
   b) a second nozzle configured for directing in a controlled way an assist gas onto said region of a work surface, preferably an assist gas for welding,
and wherein said at least one control unit is coupled to said set of nozzles and is configured for controlling at least one nozzle of said set of nozzles according to the type of laser processing operation associated to and selected from said set of types of laser processing operations in order to control said nozzles so that they will direct respective processing materials onto said region of a work surface simultaneously with direction of said laser beam associated to the type of laser processing operation selected onto said region of said work surface.

In this way, it is possible to carry out processing operations of various kinds (for example, welding, cladding, additive manufacturing, cutting, and ablation) using one and the same laser head, to carry out both laser processing of an additive type, such as the DED additive manufacturing, and laser processing of a subtractive type, such as laser cutting, as well as laser processing of some other type, such as ablation. In particular, this is facilitated by the possibility of selecting each time activation of the source and/or activation of the tools that are most convenient for carrying out the operation chosen. For instance, in the sector of additive manufacturing, it is possible to use, in particular in an alternative and not necessarily simultaneous way, a first source having a first wavelength configured for treating materials with high reflectivity (for example, copper, brass, aluminium) and a second source having a second wavelength configured for materials with low reflectivity (for example, iron, steel), thus favouring safeguarding of the properties of the optical components of the apparatus from damage due to undesired reflections.

One or more embodiments may regard a corresponding method. A method for controlling an apparatus according to the present description may be an example of such a method.

In various embodiments, the set of selectable optical paths comprises at least two optical paths for supplying a first laser beam from a first laser source to said laser head, and/or at least two types of laser processing operations of said set of types of laser processing operations are associated to at least one respective nozzle of the set of nozzles so as to render use of the head flexible in different contexts.

In particular, at least one portion of at least one of the two optical paths is obtained with dual-core optical fibre comprising at least one inner core and one outer core, where said at least one of said at least two optical paths configured for supplying a first laser beam from a first laser source to said laser head comprises an optical switch configured for directing said first laser beam, alternatively, into the inner core or into the outer core of said dual-core optical fibre.

This solution affords the possibility of selecting a (resonant) mode of the laser beam and consequently a power distribution of the laser beam, which may be Gaussian or doughnut-shaped, the latter, in particular, making it possible to carry out particular processing operations, for example during welding between joints of different sizes or also cuts with a better surface finish.

The set of nozzles of the laser head is mobile between a protruding position and a recessed position, and moreover the laser head comprises:
- a cavity for receiving the nozzles, which is configured for housing the nozzles in said recessed position; and
- a set of actuators coupled to said set of nozzles;
and the control unit is coupled to the set of actuators and is configured for controlling said set of actuators to translate said nozzles between the protruding position and the recessed position according to the type of laser processing operation selected from the set of selectable types of laser processing operations.

The above solution facilitates reduction of interference between a workpiece and the nozzles during types of processing operations that do not necessarily require the aforesaid nozzles, for example during laser cutting. Moreover, advantageously, provision of mobile nozzles that can be recessed in a cavity when they are not in use prevents the nozzles from being exposed to residual heat during a process in which they are not used.

In particular, the set of types of laser processing operations that can be carried out comprises at least two types of laser processing operations, which include direct-deposition additive manufacturing with a first type of processing material in the form of powder and at least one of the following: direct-deposition additive manufacturing, which uses a second type of processing material in the form of powder different from the first; ablation; wire welding; cladding; heat treatment; and laser cutting.

In various embodiments, the set of nozzles of the apparatus comprises at least one nozzle that can be articulated about an articulated joint of its own and an electric actuator configured for orienting the nozzle with respect to the articulated joint, and moreover the control unit is configured for issuing a command to the electric actuator for it to bring said at least one articulated nozzle to assume a first, protruding, position or a second, recessed, position.

The above solution facilitates reduction of the overall encumbrance of the head, in particular in the case where the articulated nozzle comprises shape-memory material in the proximity of or in a position corresponding to the articulated joint, where the shape-memory material is configured for bringing the nozzle into one between the first orientation and the second orientation, alternatively, as a function of a value of electric current applied to the articulated joint via a cable. In particular, the aforesaid first orientation causes the nozzle to form an angle, for example an obtuse angle β, with an optical axis of direction of the laser beam towards said region of said work surface, whereas the second orientation causes the nozzle to be parallel to said optical axis.

Moreover, via a further electric actuator, for example a roto-translational actuator, driven by the control unit, the encumbrance of the nozzles in the processing area is reduced or eliminated in a very effective way.

In order to reduce or eliminate the encumbrance of the nozzles so as to reduce any possible interference with the laser head, in various embodiments the first nozzle, the second nozzle, and at least two nozzles configured for directing jets of powder material, preferably metal powder, set facing one another in said set of nozzles are assembled in a supporting structure in the laser head so as to form the vertices of an equilateral rhombus having its centre in the proximity of or in a position corresponding to a hole for output of the laser beam from the head so as to reduce the encumbrance of the nozzles.

In various embodiments of the apparatus, at least one nozzle for directing jets of powder material may comprise an iris diaphragm, formed by a set of blades pivoted in a rotating ring and an electric actuator coupled to said rotating ring and configured for turning the ring so as to vary an area of an aperture section of said nozzle in a direction transverse to a direction of emission of said jets of powder, consequently varying a flow rate of said jets of powder. The above actuator may be driven, for example, by the control unit.

The above mechanism of variation of the aperture section of at least one nozzle for directing jets of powder renders the production process flexible on the basis of the requirements of resolution and precision for the individual workpiece. For instance, this solution advantageously facilitates, with the use of just one laser head:
- improvement of the precision of the process of additive manufacturing in the case where pieces are to be obtained with high resolution, i.e., with the possibility of controlling in a fine way the characteristics of the workpiece by reducing the aperture section of the nozzle; and
- maintenance of a high production rate in the case of production of massive pieces simply by increasing the aperture section of the diaphragms.

The object of the invention is also a corresponding method for controlling such an apparatus, see claim 14, the method comprising operations of:
- providing the control unit with a look-up table, with which to associate to each type of laser processing operation that can be selected from said set of types of laser processing operations, a set of parameters comprising, for example: a state of power supply of at least one laser source of said at least two laser sources that are different from one another and are configured for supplying respective laser beams having wavelengths different from one another, and an orientation of at least one orientable optical component in said set of selectable optical paths, as well as a parameter of activation of at least one nozzle of said set of nozzles.

The method may moreover envisage providing the control unit with a look-up table with which to associate to each type of laser processing operation that can be selected from said set of types of laser processing operations a set further comprising at least one parameter between a position of one or more nozzles of said set of nozzles and an orientation of one or more nozzles of said set of nozzles.

The above method affords the possibility of controlling the apparatus in a personalized way according to the production requirements, thus maintaining a high flexibility of operation of the apparatus.

### Brief description of various views of the drawings

One or more embodiments will now be described, purely by way of example, with reference to the annexed drawings, wherein:
- Figure 1 is a diagram exemplifying a laser-processing apparatus according to the present description;
- Figure 2 illustrates a portion of the diagram of Figure 1;
- Figure 3 illustrates a diagram exemplifying the architecture of a numeric control unit for managing control of the actuators;
- Figures 3A and 3B illustrate diagrams exemplifying possible power distributions of a laser beam that can be used in an apparatus according to the present description;
- Figure 4 and 4A, the latter comprising a portion a) and a portion b), represent various views of a laser head, which can be operated as end tool of a laser machine tool that can be configured for carrying out at least one type of laser processing operation that can be selected from a set of types of laser processing operations according to the present description;
- Figures 5, 5A and 6 are various perspective views of portions of the laser head, which can be operated as end tool of a laser machine tool that can be configured for carrying out at least one type of laser processing operation that can be selected from a set of types of laser processing operations according to the present description; and
- Figures 7 illustrates a diagram of a machine tool in which an apparatus according to the present description can be used.

### Detailed description of examples of embodiments

In the ensuing description, one or more specific details are illustrated in order to enable an in-depth understanding of examples of embodiments of the present disclosure. The embodiments may be obtained without one or more of the specific details or with other methods, components, materials, etc. In other cases, known operations, materials, or structures are not illustrated or described in detail so that certain aspects of the embodiments will not be obscured.

Reference to "an embodiment" or "one embodiment" in the framework of the present description is intended to indicate that a particular configuration, structure, or characteristic described with reference to the embodiment is comprised in at least one embodiment. Consequently, phrases such as "in an embodiment" or "in one embodiment" that may be present in one or more points of the present description do not necessarily refer precisely to one and the same embodiment.

Moreover, particular conformations, structures, or characteristics may be combined in any adequate way in one or more embodiments.

The references used herein are provided merely for convenience and hence do not define the sphere of protection or the scope of the embodiments.

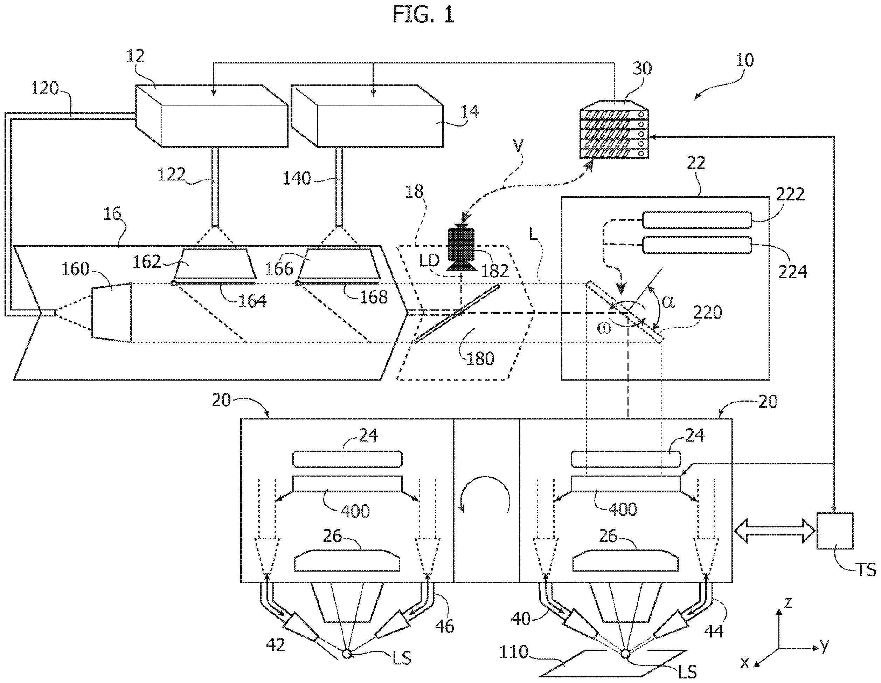

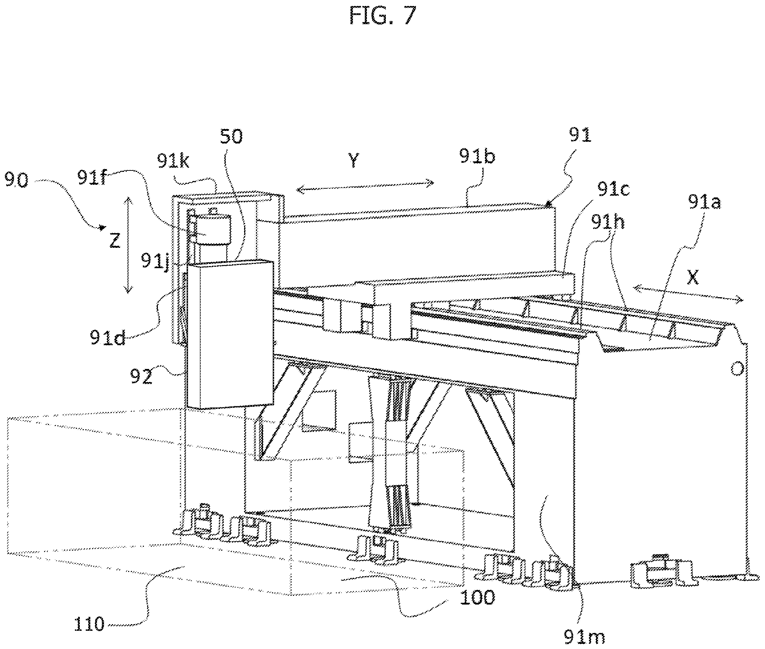

Represented in Figure 1 is a diagram of a laser-processing apparatus 10, comprising a laser head 20, which can be operated as end tool of a laser machine tool, for example a machine tool with a movement structure configured for translating the laser head 20, which may be of the cantilever type 90, as exemplified in Figure 7, or of the anthropomorphic robot-arm type or of some other type.

As has been said, the laser head 20 may be configured so as to carry out at least one type of laser processing operation that can be selected from a set of types of laser processing operations, as discussed in what follows.

In particular, the apparatus 10 as exemplified in Figure 1 may be prearranged to carry out in a flexible way a set of laser processing operations, amongst which in particular welding, cladding, direct-energy-deposition (DED) additive manufacturing, and ablation, as discussed in what follows.

In order to be able to carry out the above processing operations in a way that can be selected by a user so as to obtain a sort of "work centre" with which to perform each time one or more laser processing operations, the above apparatus comprises a set of at least two laser sources 12, 14, in particular sources different from one another (e.g., both as regards the wavelength and as regards the power) and configured for supplying respective laser beams having wavelengths different from one another. For instance, the set of at least two laser sources 12, 14, may comprise sources different from one another both as regards the wavelength and as regards the power; for example:
- a first laser source 12 may be configured for supplying a first laser beam having a first wavelength of, for example, 1070 nm and a power of 5 kW (1 kW = 1 kilowatt = 10³ watt), that can be used in particular for the operations of welding, cladding, DED additive manufacturing, and laser cutting; and
- a second laser source 14 may be configured for supplying a second laser beam having a second wavelength of, for example, 532 nm and a power of 500 W, which can be used in particular for the operations of DED additive manufacturing and ablation.

In particular, the second laser source 14 may be used in operations (such as DED additive manufacturing, cutting, and welding) in which the materials to be treated are highly reflective materials, e.g., copper, brass, or aluminium.

By "highly reflective materials" are meant those materials that tend to reflect electromagnetic radiation incident thereon, having a specific wavelength, in a percentage much higher than 500 of the incident light.

It should be noted that the above list of possible laser processing operations and the above combinations of operations for the sources are presented purely by way of example and in no way limit the types of laser processing for which the apparatus may be prearranged to operate in a flexible way.

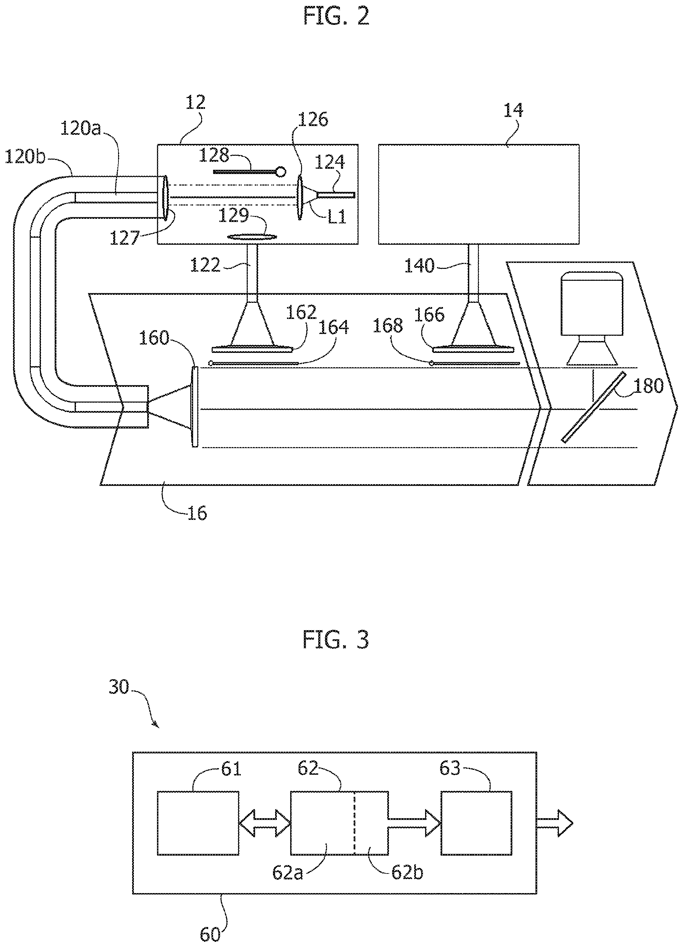

As exemplified in Figures 1 and 2, where Figure 2 illustrates a portion of the diagram of Figure 1, the set of the laser sources 12, 14 can be controlled via a control unit 30 coupled thereto.

For instance, the control unit 30 can communicate commands that bring about switching-on, with consequent emission of respective laser beams, or switching-off of one or more sources, or else can drive an optical switch inside the first source to send the laser beam towards a first output or a second output. The laser beams emitted by the respective sources 12, 14 are then supplied to the laser head 20, which can be operated as end tool of a laser machine tool 90, 80 for carrying out at least one laser processing operation.

In particular, as exemplified in Figures 1 and 2:
- the first laser source 12 may comprise a conveying system made of optical fibre 124 and a collimation lens 126 and an optical switch 128, for example an orientable mirror, which are configured for directing a laser beam L1 alternatively towards a first focusing lens 127 coupled to a first stretch of optical fibre 120, in particular multi-clad optical fibre, as discussed in what follows, or else in another direction, hence towards another focusing lens coupled to a stretch of fibre with just one core 122 (which could be configured for emitting the laser beam with a Gaussian mode or, for example, with a top-hat mode); and
- the second laser source 14 may present just one output configured for supplying the laser beam to a third stretch of optical fibre 140, for example "standard" optical fibre.

As has been said, in various embodiments, where at least one portion 120 of at least one of said at least two optical paths 120, 122 for supply of the first laser beam L1 from the first laser source 12 to the laser head 20 comprises a stretch of multi-clad optical fibre 120, which includes a light-guide core 120a surrounded by at least one further layer of light-guide cladding 120b around the core 120a, and where at least one of the at least two optical paths for supply of a first laser beam from a first laser source to the laser head 20 comprises an optical switch configured for directing the first laser beam L1, alternatively, into the core 120a or into the further light-guide cladding layer 120b of said multi-clad optical fibre 120.

In various embodiments, the first laser source 12, and in particular the stretch of multi-clad fibre, may comprise a system of the type discussed in the Italian patent application No. 102018000021538 filed in the name of the present applicant. Such a system or apparatus may comprise: a multi-clad fibre, which includes a light-guide core surrounded by at least one further light-guide cladding layer around said light-guide core; an input interface comprising a first set of channels for input into said core, configured for receiving at least one first optical fibre, and a second set of channels for input into the aforesaid at least one light-guide cladding layer, configured for receiving at least one second optical fibre. The above apparatus may further comprise an optical switching module, which includes an input port, a first output port and a second output port, a first optical path between said input port and said first input channel of said first set of channels for input into the aforesaid core via said first output port, and at least one second optical path between said input port and a second input channel of said second set of channels for input into said at least one light-guide cladding layer via said second output port, said optical switching module being controllable for switching between said first optical path and said second optical path; and a set of laser modules comprising at least one first laser module and at least one second laser module, said laser modules being configured for emitting respective laser beams when they are in a respective on state, said at least one first laser module being coupled to an input channel of said first set of input channels via said at least one first optical fibre, said at least one second laser module being coupled to said optical switching module.

Optionally, the optical switch 128 can be controlled, for example with signals sent by the control unit 30, so as to assume a number of positions, for instance to assume an inclination that can range between 0° and 45° with steps of 5°, so as to guide the laser beam L1 emitted by the laser source 124 in a "fine" way towards the first output. The above solution, as has been said, helps to render the (resonant) mode in which the laser beam propagates flexible, facilitating formation, for example, of a doughnut-shaped profile of the laser beam or a Gaussian profile of the laser beam.

In an embodiment like the one exemplified in Figure 1, the set of sources 12, 14 is coupled to the head 20 via a set of modules, namely:
- an optical-selection module 16, configured for guiding, alternatively, a laser beam L of the laser beams emitted by the set of sources 12, 14 in an optical path selected from a set of selectable optical paths in such a way that just one laser beam L is supplied each time to the laser head 20 which has optical properties (for example, with a mode of the laser beam) suited to a type of processing operation selected;
- a diagnostic module 18, configured for monitoring the properties of the laser beam L supplied to the head 20 and for supplying the control unit 30 with a signal V indicating the aforesaid properties, for example an image of a laser spot.

The optical-selection module 16, as exemplified in Figures 1 and 2, comprises for example:
- a first collimation lens 162 followed by a first optical switch 164, for instance a mirror that can be oriented between two positions, which are configured for collimating and guiding the beam at output from the second stretch of optical fibre 122;
- a second collimation lens 166 followed by a second optical switch 168, for example a mirror that can be oriented between two positions, which are configured for collimating and guiding the laser beam at output from the second stretch of optical fibre 140; and
- a third collimation lens 160, configured for collimating the laser output beam at output from the third stretch of optical fibre 120.

The aforesaid optical switches 168, 164 in the selection module 16 and the optical switch 128 in the first source 12 can be driven by the control unit 30 so as to assume:
- a first, closed, position, in which the optical switch blocks exit of the laser beam from the optical fibre; and
- a second, open, position, in which the optical switch facilitates the exit of the laser beam from the optical fibre and determines a direction of propagation thereof in air.

The control unit can drive the aforesaid switch 128, 168, 164 to assume respective open/closed positions as a function of parameters of the processing operation selected by a user.

For instance, in the case where a welding operation is to be carried out, the control unit will drive the switch 128 to send the beam L1 towards the first output 127, and the optical switches 168, 164 in such a way that they are both in a closed state so as to supply to the laser head 20 the beam at output from the multi-clad optical fibre 120.

In another example, if the processing operation selected is laser cutting, then the control unit 30 drives the switch 128 to direct the beam L1 towards the second output 129 and the first switch 164 in such a way that it is open, while it drives the second switch 168 in such a way that it is closed so as to supply to the laser head 20 the beam at output from the simple optical fibre 122.

In another example, if the processing operation selected is laser ablation, then the control unit 30 drives the switch 128 and the switch 164 so that they are closed and the switch 168 so that it is open so as to supply to the laser head 20 the beam at output from the third optical fibre 140.

Table 1 below sums up what has been discussed previously in regard to the embodiment exemplified in Figures 1 and 2.

**Table 1**

| PROCESSING | SOURCE | SWITCH 128 | SWITCH 164 | SWITCH 168 |
|---|---|---|---|---|
| Welding | 12 | Open | Closed | Closed |
| High-reflective welding | 14 | Closed | Closed | Open |
| Heat treatment | 12 | Open | Closed | Closed |
| Cladding | 12 | Open | Closed | Closed |
| DED | 12 | Open | Closed | Closed |
| Laser cutting | 12 | Closed | Open | Closed |
| High-reflective laser cutting | 14 | Closed | Closed | Open |
| Ablation | 14 | Closed | Closed | Open |
| High-reflective DED | 14 | Closed | Closed | Open |

In one or more embodiments, use of the aforesaid method for directing the laser beam from the set of the at least two sources, thanks to the fact of providing selectable optical paths for one of the two lasers, can advantageously avoid the need to switch off and on one source or the other each time to supply the laser beam, thus reducing the processing down times and reducing degradation in performance of the sources that could be damaged by continuous on and off sequences. In general, one or more embodiments favour an improved versatility of the technological processes thanks to the integration of a number of laser sources in a single system.

As exemplified in Figures 1 and 2, the diagnostic module 18 may comprise a dichroic optical element 180, i.e., one in which the wavelength of the transmitted light is different from the wavelength of the reflected light, and a light sensor 182, preferably a camera, set downstream of the selection module 16 and along the optical path of the laser beam L. Specifically, the dichroic optical element 120 is configured for deviating a portion Ld of the laser beam L that propagates along the optical path selected, i.e., towards the sensor 182, so that the sensor 182 will detect the aforesaid portion of deviated laser beam Ld and will supply to the control unit a signal V representing the measurement of properties of said portion of laser beam Ld.

The control unit 30 is coupled to said light sensor 182 and can be configured for driving the laser sources 12, 14 and/or the optical switches in the selection module 16 as a function of the measurement signal V detected.

As exemplified in Figure 1, downstream of the diagnostic module 18, the laser beam L is then supplied to the laser head 20.

The aforesaid laser head 20 is configured for transmitting the laser beam L via a set of optical components (or modules) that are orientable (i.e., mobile) 22, 24, 26, so as to direct it onto a work surface 110 while it is being translated along axes X, Y, Z via a movement structure TS. The supporting structure may be a cantilever supporting structure, as exemplified in Figure 9, or an anthropomorphic robot, as exemplified in Figure 10.

The aforesaid set of optical components 22, 24, 26 comprises, for example:
- a laser-beam orientation module 22, configured for imparting on the laser beam L emitted by the head 20 at least a dynamic movement of oscillation ω;
- a beam-shaping optics 24, for example a diffractive lens, for varying a (resonant) mode of the laser beam L, i.e., configured for varying selectively a power distribution of the laser beam directed onto the region of the work surface; and
- a focusing lens 26, configured for directing the laser beam L onto a region of a work surface 110, to form a focusing spot of the laser beam LS on the aforesaid region.

It should be noted that the above set of optical components 22, 24, 26 is presented purely by way of non-limiting example, it remaining on the other hand understood that in various embodiments one or more of the elements 22, 24, 26 might be different or absent according to the requirements of a user. In fact, it is advantageously possible to prearrange a variable amount and variable types of orientable optical modules, comprising optical components coupled to respective actuators, to be inserted as optical components into the set 22. This involves the possibility of prearranging the apparatus on the basis of the requirements of the types of processing operations that a user wishes to be able to carry out with the laser head 20.

In general, by "work surface" is meant the surface at the level of which the process is carried out, in particular the surface, whether this be also the surface of the support or of the element on which processing is carried out.

The laser-beam orientation module 22 may comprise an orientable mirror 220, in particular a mirror that can be oriented via one or more actuators 222, 224 to which it is coupled, for example galvanometric actuators configured for varying at least an angle of inclination thereof via an optical scanner, for example by driving the actuator 22a, or a process for imparting a dynamic movement on the laser beam L, for example by varying, with a frequency of variation ω, at least an angle α between an axis normal to a reflecting surface of the mirror and a direction of propagation of the laser beam L.

In various embodiments, in particular when one of the types of processing operation selected is DED additive manufacturing, for example the actuator 222 can be controlled according to a "wobbling" process such as the one described in the Italian patent application No. 102019000004681, filed in the name of the present applicant. Such a process may comprise an additive-manufacturing process, where an additive-manufacturing head is provided configured both for directing one or more jets of powder, in particular metal powder, onto a region of a work surface, and for directing simultaneously a laser beam onto said region to form a focusing spot of the laser beam on said region, and where, during direction of said jets of powder and of said laser beam, said additive-manufacturing head is simultaneously translated in a direction transverse to the direction of the laser beam so as to give rise to a trace (MPP) obtained by melting of said powder as a result of the power transmitted to said powder by said focusing spot. During movement (V) of the additive-manufacturing head in said transverse direction, a dynamic movement imparted on the laser beam is emitted by the head, said movement being configured in such a way as to obtain a width of the trace that is independent of the size of the focusing spot of the laser beam and is equivalent to the one produced by an apparent spot having a width substantially corresponding to the width of the trace, and in such a way that the distribution of the power transmitted by the laser beam to the trace varies in the direction of width of the trace.

In various embodiments, for example, the actuator 224 can be controlled according to a process modelled on an optical scanner in itself known.

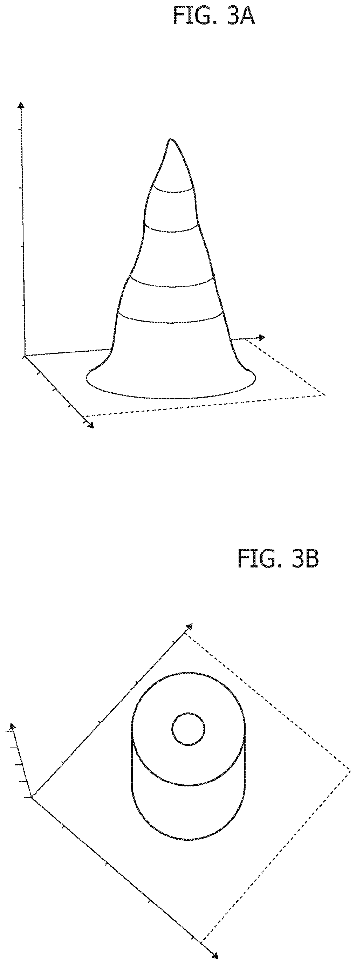

In one or more embodiments, for example, the beam-shaping lens 24 can vary the power distribution of the laser beam L so as to obtain a beam having a Gaussian distribution as exemplified in Figure 3A, or also other distributions as, for example, a top-hat or doughnut-shaped distribution.

In particular, in various embodiments, the beam-shaping lens 24 may comprise:
- a diffractive diffuser configured for separating a laser beam incident thereon in semi-random directions so as to obtain the desired shape of the power distribution of the laser beam L; and/or
- a diffractive axicon (DA), i.e., a type of diffractive optical element that transforms a laser beam into a ring shape (e.g., having a Bessel intensity profile).

For instance, a power distribution, such as top-hat distribution, can be obtained using a beam-shaping lens 24 comprising diffractive optics of the "round" optics type.

In various embodiments, the aforesaid beam-shaping optics can facilitate also formation of a doughnut-shaped profile of the laser beam, as exemplified in Figure 3B. In particular, this profile may be the result of use of a beam-shaping lens 24 comprising diffractive optics of a "negative" type.

As has been said, in various embodiments, for example as an alternative to the use of the beam-shaping optics, the position of the optical switch 128 can be varied in such a way that the radiation emitted by the laser 124 is conveyed into the outer core 120b of the multi-clad fibre 120, facilitating formation of a doughnut profile of the laser beam, as exemplified in Figure 3B.

It should be noted that, even though the above optical components have been described as being comprised in the head, in various embodiments they could not be present or be comprised outside the head; in particular, the laser-beam orientation module could be located at the input of the head but mechanically decoupled therefrom.

In various embodiments, the control unit 30 may comprise a numeric control unit 60, as exemplified in Figure 3, which represents a principle diagram of the architecture of a numeric control unit 60 for managing control of the actuators, i.e., the motors such as the motors of the movement structure 90, 80 that move the axes X, Y, Z, the motors that move the laser-beam orientation module 22, i.e., the galvanometric actuator 222, 224 of the mirror 220, as well as further electric actuators, as discussed in what follows, in particular in relation to nozzles of the head 20. The aforesaid unit 60 comprises two personal computers 61 and 62. The personal computer 61 operates as user interface to send instructions and commands to the second personal computer 62, which preferably comprises an operating system 62a associated to extensions of a real-time type 62b for management of the machine. The operating system may, for example, be of a type Linux type, a WinCE type, or be obtained via proprietary solutions. The personal computer 62 hence supplies the paths to be followed to a servo-control card 63 of a DSP PCI type for control of the actuators.

Implemented in the personal computer 62 and in the servo-control card 63 are procedures for driving the apparatus 10, as discussed in what follows.

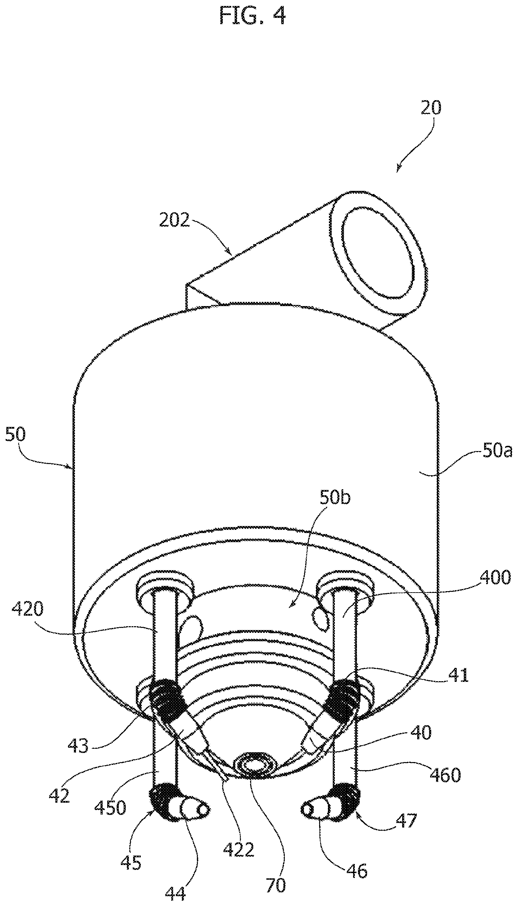

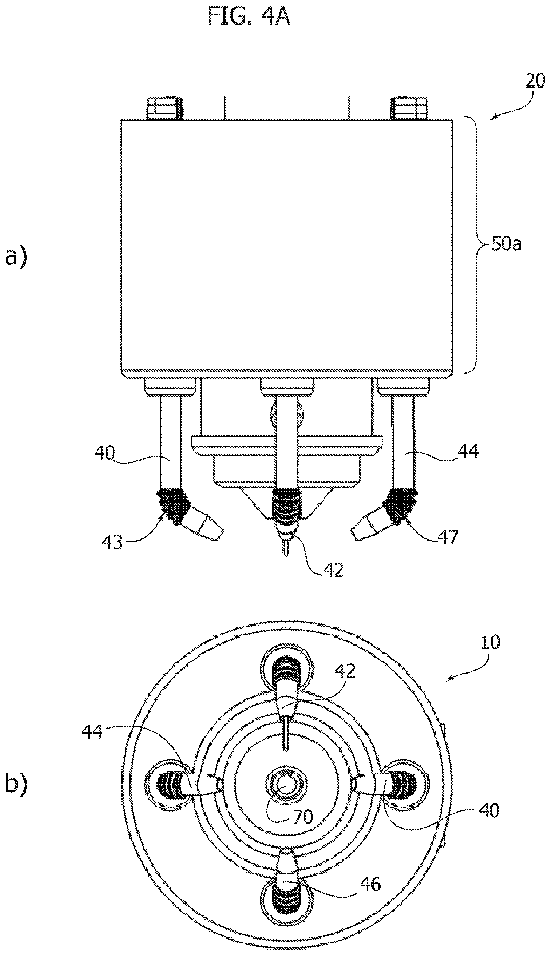

Some laser processing operations require, in addition to use of the laser beam, also provision of the materials for carrying out the process. In particular, as exemplified in Figure 4:
- in the case of DED additive manufacturing, at least one nozzle 40, 44 it used for directing jets of powder of at least one material, preferably metal powder;
- in the case of welding, a first nozzle 42 is used configured for directing, i.e., guiding or unwinding, in a controlled way, a metal wire onto the aforesaid region of a work surface, preferably metal wire (a portion 422 of which is represented as projecting from the nozzle 42) for laser welding, and optionally a second nozzle 46 is used configured for directing in a controlled way an assist gas onto the aforesaid region of a work surface, preferably an assist gas for welding; and
- in the case of laser cutting, a duct may be used for supplying a supporting gas that can be introduced into the terminal part of the head in such a way that the gas comes out of the same hole 70 as that for output of the laser beam or in a way coaxial thereto.

To carry out a plurality of processing operations in a flexible way, the laser head 20 may hence be equipped with a set of nozzles 40, 42, 44, 46 for carrying out the aforesaid processing operations.

Figure 4 shows by way of example a perspective view of a laser head 20.

For instance, the laser head 20 includes:
- a coupler 202, comprising a tubular duct configured for coupling the head 20 mechanically to a movement structure, for example to the robot arm of an anthropomorphic robot, and for receiving the laser beam L, for example downstream of the diagnostic module 18 or of the laser-beam orientation module 22;
- a supporting structure 50, comprising a central body 50a and a terminal part 50b, the terminal part comprising a hole 70 for output of the laser beam L: for example, the terminal part 50b may have the shape of a cone turned upside down (whence the term "sensor cone") having the output hole 70 located at the tip of the aforesaid cone, as exemplified in the figure; and
- a set of nozzle-carrier arms 450, 452, 454, 456 comprising rigid portions and articulated portions 41, 43, 45, 47, to which respective nozzles of a set of nozzles 40, 42, 44, 46, are coupled and which can be translated through respective guides 460, 462, 464, 466 by respective actuators 470, 472, 474, 476, for example roto-translational linear actuators.

Optionally, two nozzles for emission of jets of powder 40, 44, which can be used for DED additive manufacturing may be advantageously set facing one another so as to emit the respective jets of powder in the proximity of or in a region corresponding to two points located at the ends of a segment passing through the central hole 70 so as to facilitate symmetrical deposition of powder on the work surface so as to achieve more accurate and improved processing.

Figure 4A comprises a portion a), represented in which is a lateral perspective view of the laser head, and a portion b), represented in which is a view from beneath upwards, i.e., the view that an observer fixed with respect to the work surface 110 would have, looking upwards.

In various embodiments, as exemplified in the portion b) of Figure 4A, for example, the first nozzle 42, the second nozzle 46, an output hole 70 set in the terminal part 50b of the support 50, and the at least two nozzles 40, 44 configured for directing, i.e., emitting, jets of powder material are assembled so as to be located at the vertices of an equilateral rhombus centred on the output hole 70 so as to reduce the encumbrance of the set of nozzles 40, 42, 44, 46, without obstructing the optical path of the laser beam L at output from the hole 70 in the laser head 20.

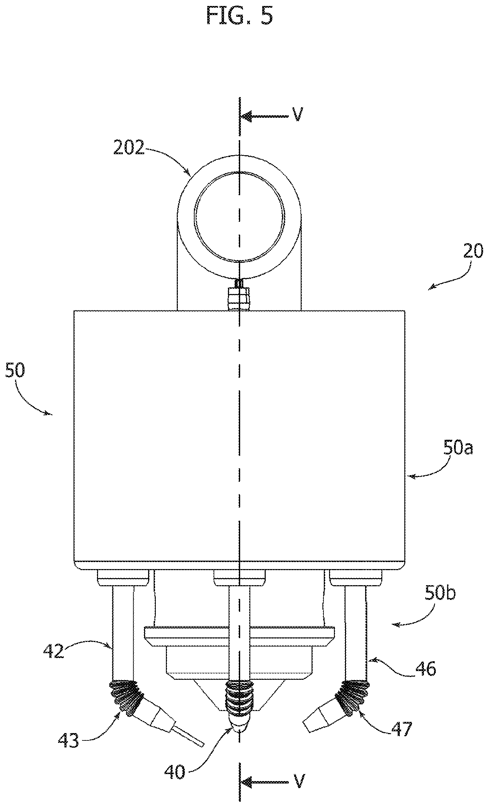

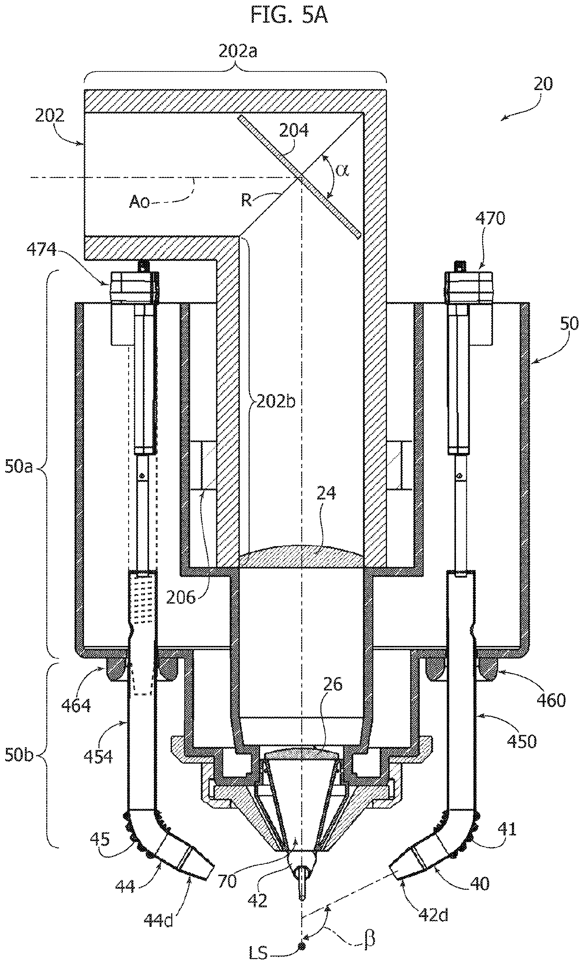

Figure 5 is a further perspective view of the laser head 20, whereas Figure 5A is a cross-sectional view along the axis V-V of the perspective view of Figure 5.

As exemplified in Figure 5A, a central axis of the second portion 202b of the tubular duct 202 can share an optical axis AO of propagation of the laser beam L.

As exemplified in Figure 5A, the coupler 202 may have, for example, the shape of an elbow pipe with circular section where the elbow forms an angle of 90° and comprise a first portion 202a upstream of the elbow and a second portion 202b downstream of the elbow. The first portion 202a can have a transverse extension smaller than a longitudinal extension, i.e., and extension in the direction perpendicular to the transverse one, of the second portion 202b, which extends within the central body 50a as far as the terminal part 50b of the supporting structure 50.

In the elbow, i.e., in the intersection between the first portion 202a and the second portion 202b of the duct 202, a mirror 204 may be present, which may be either a fixed mirror or an orientable mirror, as discussed previously in relation to the laser-beam orientation module 22. The mirror 204 can be coupled to the duct 202 so as to form a right angle, i.e., an angle of 90°, with an axis R that joins the connection points between the first portion 202a and the second portion 202b of the duct 202.

The above portion 202b downstream of the elbow moreover houses further optical components, for example the beam-shaping optics 24. In particular, the beam-shaping optics 24 can be located as terminal element of the portion downstream of the elbow 202b that extends into the central body 50a of the supporting structure 50.

An outer diameter of the coupler 202 and an inner diameter of the central body 50a can be set apart by a spacer 206, for example shaped like a ring that surrounds the second portion 202b of the cylindrical tube 202.

In order to carry out processing operations according to the method discussed herein, the head 20 may, for example, be provided with cabling, for example constituted by optical fibre, for conveying the radiation emitted by one of the sources of laser radiation, set remote from the head.

The aforesaid wiring may be associated to ducts for possibly delivering also supporting gas, i.e., assist gas, such as argon or nitrogen, which supports the process of welding, cutting, or additive manufacturing. The aforesaid cabling may include a catenary comprising the aforesaid respective ducts and/or ducts for delivering powder material for additive manufacturing supplied by respective supply devices arranged remote from the head 20. Moreover, the aforesaid catenary may comprise driving and control electrical cables and possible cooling delivery pipes. In various embodiments, the aforesaid ducts (for example, those for gas, those for powder alone, optical-fibre cables and electrical cables) may be within one and the same catenary, in which they will in any case remain insulated from one another (i.e., the gas duct cannot convey the powder and is insulated from the duct for the powder, and the same applies to all the ducts in the catenary).

In various embodiments, in particular, the device for supplying the supporting gas for laser cutting can be coupled, via a respective duct, to the terminal portion 50b of the laser head 20 in such a way that, once the aforesaid supporting gas is emitted, it will come out of a hole 70 for output of the laser beam located in the aforesaid terminal part 50b of the laser head 20, for example in a coaxial way with respect to the laser beam. The control unit can be coupled to said supply device and configured for governing emission of the assist gas for laser cutting through the terminal part 50b of the head when an operation of laser cutting is selected. The laser head 20 further comprises a set of actuators and guides 400 coupled to at least one nozzle, for example to the gas nozzle 46, of a set of nozzles 40, 42, 44, 46 in such a way that at least one of the aforesaid nozzles, or preferably all of them, is mobile or retractable, i.e., mobile continuously or in discrete steps between a protruding position and a recessed position so as to be used for carrying out a laser processing operation when it is located on the outside of the head 20 in a protruding position with respect to a central body 50a of a supporting structure 500 of the head 20, and can be brought back into the recessed position where it is received into a purposely provided cavity within the central body 50a when it is not used for carrying out processing. Advantageously, this consequently prevents any damage to the mechanical characteristics of the aforesaid nozzles, which otherwise, if they were not mobile or retractable, would risk getting damaged by being struck by the reflections of the laser beam during operations in which they are not directly used. Moreover, in the case where they these nozzles were not mobile or retractable, they could also entail an encumbrance such as to affect performance of the processing operation.

The nozzles, which can be seen in perspective view of Figure 5A, are nozzles configured for emitting jets of powder 40, 44; hence, in what follows, reference is made to the latter for simplicity, it remaining on the other hand understood that, except where otherwise specified, what has been discussed in relation to the system of translation of the aforesaid nozzles can apply also to other nozzles of some other type, for example to the nozzles 42, 46.

As exemplified in Figure 5A, the cylindrical body 50a contains, inside, a cavity for housing:
- the actuators 470, 474 of the respective arms of the mobile or retractable nozzles; and
- the arms of the respective nozzles, for example 450, 454, comprising the respective articulated joints 41, 45 coupled to the respective nozzles 40, 44.

In the view of Figure 5A, the nozzles in the protruding position are represented with a solid line, whereas the nozzles in the retracted position are represented with a dashed line in order to illustrate also this function.

In various embodiments, the control unit 30 is configured for driving the set of actuators 400 so that they will translate at least one nozzle 40, 42, 44, 46 between the protruding position and the recessed position according to the type of laser processing operation that can be selected from the set of types of laser processing operations.

As has been mentioned, the control unit may comprise a numeric control unit 60, as exemplified in Figure 3, which, according to procedures in themselves known, generates a instruction sequence P, corresponding to a so-called part program, for a "virtual" machine with given specifications of acceleration and speed. The aforesaid instruction sequence P comes from the personal computer 61, and derives from a purposely provided program, for offline setting of the paths and movements of the machine. Applied thereto is an interpolation function, which, on the basis of the instruction sequence P, carries out generation of a path of the machine tool. This path of the machine tool corresponds to the kinematic coordinates that describe in time the motion of a point of the machine tool, for example a joint or a terminal, or TCP (Tool Center Point), to which the laser head 20 can be coupled. This interpolation operates in response to a preparation code, or G-Code, sent within the instruction sequence P. The operation of interpolation is implemented via software within the personal computer 62.

It should be noted that in the solution described herein the unit 60 is moreover configured for sending further commands regarding for example the flow rate of the jets of powder to be melted, the flow rate of the supporting gas, the characteristics of the laser radiation (power, continuous mode/pulsed mode/other mode, possible frequency and duty cycle, shape of the profile of radiation, whether Gaussian, top-hat, or some other), and the characteristics of the laser beam (diameter, focusing, etc.). The aforesaid commands can be associated to the instruction sequence P so as to occur in given points and at given instants defined by the path of the head while it is being translated by the supporting structure to which it is coupled.

The commands regarding the characteristics of the laser radiation and the characteristics of the laser beam can be controlled for regulating the thermal profile, for example by varying the power and/or diameter and/or focusing of the laser spot in the stretches of processing path.

Table 2 presents below in a synthetic way an example of how it is possible to associate to different processing operations the different positions of the nozzles. The control unit 30 can drive the actuators to assume a position between a protruding position and a recessed position, for example, according to a table appearing below.

It should be noted that the aforesaid list of associations between types of processing and position of the nozzles is provided purely by way of example, it remaining on the other hand understood that other types of processing and nozzles may be used in various embodiments.

**Table 2**

| PROCESSING | NOZZLES 40-44 | NOZZLE 42 | NOZZLE 46 |
|---|---|---|---|
| Wire welding | Recessed | Protruding | Protruding |
| Laser welding | Recessed | Recessed | Protruding |
| Heat treatment | Recessed | Recessed | Recessed |
| Cladding | Protruding | Recessed | Recessed |
| DED | Protruding | Recessed | Recessed |
| Laser cutting | Recessed | Recessed | Recessed |
| Ablation | Recessed | Recessed | Recessed |
| High-reflective DED | Protruding | Recessed | Recessed |

In various embodiments, as exemplified in Figure 5 and 5A, the set of nozzles comprises at least one nozzle articulated about an articulated joint 41, 45 of its own. Moreover, the aforesaid articulated joint can be controlled via an electrical signal, such as a current applied to the said articulated joint, in particular using an electrical cable connected to the articulated joint and configured for orienting the nozzle, for example the nozzle 44, with respect to the aforesaid articulated joint 45 of its own, for example controlled via the control unit 30.

For instance, the control unit 30 can control the aforesaid shape-memory articulated joint by applying an electric current so that cause the articulated nozzle 40 to assume a first orientation, for example inclined so as to form an angle β, for example an obtuse angle as exemplified in the figure, with the direction AO of emission of the laser beam, when the nozzle 40 is in the aforesaid protruding position, or a second orientation, for example parallel to the stretch of optical axis AO of the laser beam in the second portion 202b of the duct 202, when the aforesaid nozzle is in the recessed position.

In particular, the articulated joint 45 may be made of shape-memory material configured for assuming a shape as a function of a current applied to the electrical cable driven by the aforesaid control unit. The guides located just before the entry point of the chamber have the purpose of bringing the nozzles back into the vertical position so as to enable their re-entry into their seats by mechanically deforming the articulated joint. In this way, advantageously, it is possible to reduce the encumbrance the actuator due to the presence of the articulated joint and to provide the openings for re-entry of the mechanical arms of the nozzles as simple circular holes having the same section as the arm of the respective nozzle.

The terminal part 50b of the frame 50 comprises a circular recess having a diameter, for example, approximately equal to the internal diameter of the duct 202 that terminates with a slight taper, which has a bottom wall that is optically transparent coupled to which is the focusing lens 26, which can have a diameter smaller than the maximum internal diameter of the duct 202.

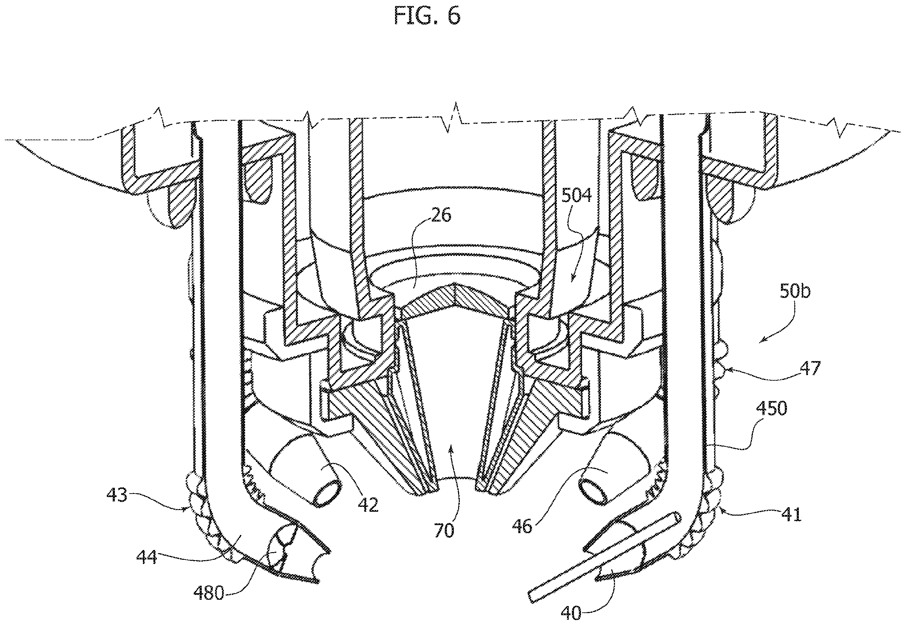

Figure 6 is an enlarged view of the terminal part 50b of the frame 50 and also shows sections of the arms and of the nozzles for DED additive manufacturing 40, 44. The aforesaid arms, as exemplified in Figure 6, may be hollow so as to guide a flow of powder, preferably metal powder, towards the nozzles. Moreover, at least one nozzle for directing jets of powder material 40 may comprise in a terminal section of its own, for example set between its own articulated joint 41 and a hole for outlet of the powder, comprises an iris diaphragm 480, for example formed by a set of blades pivoted in a rotating ring, and an electric actuator coupled to said rotating ring and configured for turning said ring.

The aforesaid actuator may be driven via the control unit so as to vary an area of an aperture section of the aforesaid nozzle 40 in a direction transverse to a direction of emission of the jets of powder. The aforesaid variation of the aperture section facilitates variation of a flow rate of the powder jet at output, once again making it possible to obtain production processes of DED additive manufacturing that are accurate and with properties of the process that can be controlled in a fine way, and thus in an improved way.

Figure 7 is hence a schematic perspective view of an embodiment of the laser machine tool, designated as a whole by the reference number 90, which comprises a movement structure 91, designed to displace a support 91d, which is associated fixedly with respect to the laser head 20 coupled to a moving element 92 along a plurality of axes, specifically three cartesian axes X, Y, Z. For instance, the machine tool having the portal structure 90 exemplified in Figure 7 may comprise a guide structure 91a, which comprises a base 91m and rails 91h, on the top part, which extend along a horizontal axis X; positioned on these rails 91h is a slide 91c that is free to slide in the direction of the axis X and resting on which is one end of a beam 91b that extends in a horizontal direction, along the axis Y, orthogonal to the axis X. This end of the beam 91b is a cantilever beam and is associated slidably along the axis Y to the slide 91c, on which it rests. The other free end of the beam 91b has a support 91k with vertical guides 91j sliding along which, driven by a motor 91f, along the axis Z, hence the vertical axis orthogonal to the plane XY, is the support 91d that carries the moving element 92.

The movements of the beam 11b with respect to the slide 91c and of the slide 11c with respect to the guide structure 11a are also driven by motors, which are not, however, visible in Figure 7.

As shown in Figure 7, as a result of the aforesaid configuration, the displacement of the moving element 92 occurs in a working volume 100, basically a parallelepiped the dimensions of which are defined by the travel of the moving element 92 along the horizontal axes X and Y and the vertical axis Z. Figure 7 moreover shows the work surface 110, which corresponds, for example, to the bottom face of the working volume 100.

It should be noted that what has been discussed in relation to the movement structure of Figure 7 is provided purely by way of example. As has already been said, in various embodiments, the movement structure of the machine tool may be of a different type, for example a robot arm, an anthropomorphic robot, a portal structure, etc.

Without prejudice to the underlying principles, the details and the embodiments may vary, even appreciably, with respect to what has been described herein, purely by way of example, without departing from the scope of the present invention as defined in the appended claims.

## Claims

1. A laser-processing apparatus (10), comprising:
- at least two laser sources (12, 14), which are different from one another and are configured for supplying respective laser beams having wavelengths different from one another,
- a laser head (20), which can be operated as end tool of a laser machine tool (90) that can be configured for carrying out at least one type of laser processing operation that can be selected from a set of types of laser processing operations;
- a set of orientable optical components (16) so as to provide a set of selectable optical paths for directing a laser beam supplied by a laser source of said at least two laser sources (12, 14); and
- a control unit (30) coupled to said at least two laser sources (12, 14), to said set of orientable optical components (16), and to said laser head (20) and configured for controlling said at least two laser sources (12, 14), said set of orientable optical components (16), and said laser head (20) according to the type of laser processing operation selected from said set of types of laser processing operations so as to carry out the type of laser processing operation selected, so as to supply and direct a laser beam associated to the respective type of processing operation onto a region of a work surface (110),
said laser-processing apparatus (10) being **characterized in that**:
said laser head (20) comprises a set of nozzles (40, 42, 44, 46) configured for directing at least one processing material onto said region of a work surface (110), said set of nozzles (40, 42, 44, 46) comprising at least one nozzle (40) configured for directing jets of powder of at least one material, preferably metal powder, as well as comprising at least one of the following:
a) a first nozzle (42) configured for directing a metal wire onto said region of a work surface, preferably metal wire for laser welding;
b) a second nozzle (46) configured for directing an assist gas onto said region of a work surface, preferably an assist gas for laser welding,
and wherein said at least one control unit (30) is coupled to said set of nozzles (40, 42, 44, 46) and is configured for controlling at least one nozzle of said set of nozzles (40, 42, 44, 46) according to the associated and selected type of laser processing operation of said set of types of laser processing operations so as to control said at least one nozzle so that it will direct respective processing materials onto said region of a work surface (110) simultaneously with the direction of said laser beam (L) associated to the type of laser processing operation selected onto said region of said work surface.
wherein:
- at least one nozzle of said set of nozzles (40, 42, 44, 46) of the laser head (20) is mobile between a protruding position and a recessed position; and
- said laser head (20) comprises:
i) a recess cavity (50a) for said nozzles (40, 42, 44, 46) configured for housing said nozzles in said recessed position; and
ii) a set of actuators (470, 472, 474, 476) coupled to said set of nozzles (40, 42, 44, 46); and
- said control unit (30) is coupled to said set of actuators (470, 472, 474, 476) and is configured for controlling said set of actuators (470, 472, 474, 476) to translate said nozzles between said protruding position and said recessed position according to the type of laser processing operation selected from the set of selectable types of laser processing operations.

2. The laser-processing apparatus (10) according to claim 1, wherein:
- said set of selectable optical paths comprises at least two optical paths (120, 122) for supplying a first laser beam (L1) from a first laser source (12) to said laser head (20); and/or
- at least two processing operations, preferably two non-simultaneous processing operations, in said set of types of laser processing operations are associated to at least one respective nozzle of the set of nozzles (40, 42, 44, 46).

3. The laser-processing apparatus according to claim 2, wherein at least one portion (120) of at least one of said at least two optical paths (120, 122) for supplying said first laser beam (L1) from said first laser source (12) to said laser head (20) comprises a stretch of multi-clad optical fibre (120), which comprises a light-guide core (120a) surrounded by at least one further layer of light-guide cladding (120b) around said light-guide core (12), and wherein said at least one of said at least two optical paths (120, 122) for supplying said first laser beam (L1) from said first laser source (12) to said laser head (20) comprises an optical switch (128) configured for directing said first laser beam (L1), alternatively, into the core (120a) or into the at least one further layer of light-guide cladding (120b) of said multi-clad optical fibre (120).

4. The laser-processing apparatus (10) according to claim 1, comprising at least one beam-shaping diffractive lens (24) configured for varying a mode of the laser beam (L), i.e., configured for varying selectively a power distribution of the laser beam directed onto the region of the work surface.

5. An apparatus according to any one of the preceding claims, wherein said at least two laser sources (12,14) different from one another comprise:
- a first laser source (12) configured for supplying a first laser beam (L1) having a first wavelength of 1070 nm; and
- a second laser source (14) configured for supplying a second laser beam having a second wavelength of 532 nm.

6. The laser-processing apparatus (10) according to any one of the preceding claims, wherein said set of nozzles (40, 42, 44, 46) comprises at least one nozzle (40) that can be articulated about an articulated joint (41) of its own and an electrical cable coupled to said articulated joint (41) of its own and to said control unit (30), wherein said control unit (30) is configured for issuing a command to said at least one articulated nozzle (40) for it to assume a first orientation (β) when said nozzle (40) is in said protruding position or a second orientation when said nozzle (40) is in said recessed position, wherein:
- in said first orientation (β) said nozzle (40) forms an angle with an optical axis (AO) with which said laser beam is directed towards said region of said work surface (110); and
- in said second orientation said nozzle (40) is parallel with respect to said optical axis (AO).

7. The laser-processing apparatus (10) according to claim 6, wherein said at least one articulated nozzle (40) comprises a shape-memory material at said articulated joint (41), said shape-memory material being configured for assuming alternatively a first shape (β) or a second shape, as a function of a current applied to said articulated joint via said electrical cable.

8. The laser-processing apparatus (10) according to claim 1, wherein said set of nozzles (40, 42, 44, 46) comprises at least two nozzles (40, 44) configured for directing jets of powder of at least one material, preferably metal powder, which are set facing one another and are controlled in a co-ordinated way by said control unit (30) so as to direct at least one processing material onto said region of a work surface (110) in such a way that it will have a uniform distribution.

9. The laser-processing apparatus (10) according to claim 8, wherein said first nozzle (42), said second nozzle (46), and said at least two nozzles (40, 44), which are configured for directing jets of powder of at least one material, preferably metal powder, and are set facing one another in said set of nozzles (40, 42, 44, 46) are assembled in a supporting structure (50) in the laser head (20) so as to form the vertices of an equilateral rhombus having its centre corresponding to an output hole (70) of the laser beam (LS) so as to reduce the encumbrance in space of the nozzles of the set of nozzles (40, 42, 44, 46), without obstructing the path of the laser beam (LS) leaving said laser head (20) .

10. The laser-processing apparatus according to any one of the preceding claims, comprising a device for supplying a supporting gas, preferably an assist gas for laser cutting, said supply device being coupled to a terminal part (50b) of said laser head (20) in such a way that said supporting gas comes out of an output hole (70) of the laser beam (LS), the output hole (70) being located in said terminal part (50b) of the laser head (20),
and wherein said at least one control unit (30) is coupled to said supply device configured so as to supply said assist gas, said control unit (30) being configured for controlling said supply device according to the associated and selected type of laser processing operation of said set of types of laser processing operations.

11. The laser-processing apparatus according to any one of the preceding claims, wherein said set of types of laser processing operations comprises at least two types of laser processing operations, preferably two types of non-simultaneous processing operations, comprising direct-deposition additive manufacturing with a first type of processing material in the form of powder and at least one of the following:
- direct-deposition additive manufacturing, which uses a second type of processing material in the form of powder different from the first;
- ablation;
- wire welding;
- cladding;
- heat treatment; and
- laser cutting.

12. The laser-processing apparatus according to any one of the preceding claims, further comprising a dichroic optical element (180) and an optical sensor (182), preferably a camera, which are set along a common stretch of said selectable optical paths (16), wherein:
i) said dichroic optical element (180) is configured for deviating a portion of said laser beam (L) that propagates in said common stretch towards said optical sensor (182); and
ii) said optical sensor (182) is configured for detecting said portion of laser beam deviated by said dichroic optical element (180) and for supplying the control unit (30) with a signal (V) representing measurements of parameters of said portion of laser beam; and
iii) said a control unit (30) is coupled to said optical sensor (182) and is configured for controlling said laser sources and/or said orientable optical components (16) as a function of said measurement signal (V) supplied by said optical sensor (182) .

13. The apparatus according to any one of the preceding claims, wherein at least one nozzle (40) configured for directing jets of powder of at least one material comprises:
- an iris diaphragm (480), comprising a set of blades pivoted in a rotating ring; and
- an electric actuator coupled to said rotating ring and configured for turning said ring nut of the iris diaphragm (480);
- said control unit (30) being coupled to said electric actuator, which is in turn coupled to said rotating ring, and being configured for controlling said electric actuator so as to vary an area of an aperture section of said at least one nozzle (40) in a direction transverse to a direction of emission of said jets of powder so as to vary a flow rate of said jets of powder.

14. A laser-processing method, comprising:
- providing an apparatus (10) according to any one of claims 1 to 13; and
- controlling said set of nozzles (40, 42, 44, 46) so that they will direct at least one processing material onto said region of a work surface (110), selecting, via said control unit (30), at least one nozzle of said set of nozzles (40, 42, 44, 46) according to the associated and selected type of laser processing operation of said set of types of laser processing operations, for directing a respective processing material onto said region of a work surface (110) simultaneously with direction of said laser beam (L) associated to the type of laser processing operation selected onto said region of said work surface.

15. The method according to claim 14, comprising:
- providing said control unit (30) with a look-up table with which to associate a set of parameters to each type of laser processing operation that can be selected from said set of types of laser processing operations, the set of parameters comprising:
- a state of power supply of at least one laser source of said at least two laser sources (12, 14), which are different from one another and are configured for supplying respective laser beams having wavelengths different from one another; and
- an orientation of at least one orientable optical component of said set of orientable optical components (16);and
- a parameter for activation of emission of at least one nozzle of said set of nozzles (40, 42, 44, 46) .

16. The method according to claim 14 or claim 15, comprising:
- providing said control unit (30) with a look-up table with which to associate, to each type of laser processing operation that can be selected from said set of types of laser processing operations, at least one further parameter from between:
- a position between retracted and protruding of one or more nozzles of said set of nozzles (40, 42, 44, 46); and
- an orientation (β) of one or more nozzles of said set of nozzles (40, 42, 44, 46).

## Patentansprüche

1. Laserbearbeitungsvorrichtung (10), mit:
- mindestens zwei Laserquellen (12, 14), die unterschiedlich voneinander sind und zur Bereitstellung entsprechender Laserstrahlen mit voneinander unterschiedlichen Wellenlängen ausgebildet sind,
- einem Laserkopf (20), der als ein Endwerkzeug einer Laserwerkzeugmaschine (90) betreibbar ist, die zum Ausführen mindestens einer Art einer Laserbearbeitung ausgebildet ist, die aus einer Gruppe aus Arten von Laserbearbeitungen auswählbar ist;
- einer Gruppe orientierbarer optischer Komponenten (16) zur Bereitstellung einer Gruppe aus auswählbaren optischen Wegen für das Lenken eines Laserstrahls, der von einer Laserquelle der mindestens zwei Laserquellen (12, 14) bereitgestellt wird; und
- einer Steuereinheit (30), die mit den mindestens zwei Laserquellen (12, 14), mit der Gruppe aus orientierbaren optischen Komponenten (16) und mit dem Laserkopf (20) verbunden und zur Steuerung der mindestens zwei Laserquellen (12, 14), der Gruppe aus orientierbaren optischen Komponenten (16) und des Laserkopfs (20) gemäß der Art an Laserbearbeitung, die aus der Gruppe aus Arten von Laserbearbeitungen ausgewählt ist, ausgebildet ist, um die Art der ausgewählten Laserbearbeitung auszuführen, um einen Laserstrahl, der der entsprechenden Art an Laserbearbeitung zugeordnet ist, zu einem Gebiet einer Arbeitsfläche (110) zu führen und darauf zu lenken,
wobei die Laserbearbeitungsvorrichtung (10) **dadurch gekennzeichnet ist, dass**:
der Laserkopf (20) eine Gruppe von Ausgabeeinheiten (40, 42, 44, 46) aufweist, die zur Lenkung mindestens eines Bearbeitungsmaterials auf das Gebiet einer Arbeitsfläche (110) ausgebildet sind, wobei die Gruppe von Ausgabeeinheiten (40, 42, 44, 46) mindestens eine Ausgabeeinheit (40) aufweist, die ausgebildet ist, Pulverstrahlen mindestens eines Materials, vorzugsweise ein Metallpulver, zu lenken und ferner aufweist:
a) eine erste Ausgabeeinheit (42), die zum Lenken eines Metalldrahts auf das Gebiet einer Arbeitsfläche, vorzugsweise eines Metalldrahts für Laserschweißen, ausgebildet ist; und/oder
b) eine zweite Ausgabeeinheit (46), die zum Lenken eines Hilfsgases auf das Gebiet einer Arbeitsfläche, vorzugsweise ein Hilfsgas für Laserschweißen, ausgebildet ist, und wobei die mindestens eine Steuereinheit (30) mit der Gruppe von Ausgabeeinheiten (40, 42, 44, 46) verbunden und zur Steuerung mindestens einer Ausgabeeinheit der Gruppe von Ausgabeeinheiten (40, 42, 44, 46) gemäß der zugeordneten und ausgewählten Art an Laserbearbeitung der Gruppe aus Arten von Laserbearbeitungen ausgebildet ist, um die mindestens eine Ausgabeeinheit derart zu steuern, dass sie entsprechende Bearbeitungsmaterialien auf das Gebiet auf einer Arbeitsfläche (110) gleichzeitig mit dem Lenken des Laserstrahls (L), der der Art gewählten Laserbearbeitung zugeordnet ist, auf das Gebiet der Arbeitsfläche, zu lenken,
wobei:
- mindestens eine Ausgabeeinheit der Gruppe von Ausgabeeinheiten (40, 42, 44, 46) des Laserkopfs (20) zwischen einer hervorstehenden Position und einer zurückgezogenen Position bewegbar ist; und
- der Laserkopf (20) aufweist:
i) eine vertiefte Aussparung (50a) für die Ausgabeeinheiten (40, 42, 44, 46), die ausgebildet sind, die Ausgabeeinheiten in der zurückgezogenen Position aufzunehmen; und
ii) eine Gruppe von Aktoren (470, 472, 474, 476), die mit der Gruppe von Ausgabeeinheiten (40, 42, 44, 46) gekoppelt ist; und
- die Steuereinheit (30) mit der Gruppe von Aktoren (470, 472, 474, 476) verbunden und zur Steuerung der Gruppe von Aktoren (470, 472, 474, 476) ausgebildet ist, derart, dass die Ausgabeeinheiten zwischen der hervorstehenden Position und der zurückgezogenen Position entsprechend der Art der Laserbearbeitung, die aus der Gruppe auswählbarer Arten von Laserbearbeitungen ausgewählt ist, verfahrbar sind.

2. Laserbearbeitungsvorrichtung (10) nach Anspruch 1, wobei:
- die Gruppe von auswählbaren optischen Wegen mindestens zwei optische Wege (120, 122) zur Zuführung eines ersten Laserstrahls (L1) aus einer ersten Laserquelle (12) zu dem Laserkopf (20) aufweist; und/oder
- mindestens zwei Bearbeitungen, vorzugsweise zwei nicht gleichzeitige Bearbeitungen, in der Gruppe aus Arten von Laserbearbeitungen mindestens einer jeweiligen Ausgabeeinheit der Gruppe von Ausgabeeinheiten (40, 42, 44, 46) zugeordnet sind.

3. Laserbearbeitungsvorrichtung nach Anspruch 2, wobei mindestens ein Bereich (120) mindestens eines der mindestens zwei optischen Wege (120, 122) für die Zuführung des ersten Laserstrahls (L1) von der ersten Laserquelle (12) zu dem Laserkopf (20) umfasst: einen Abschnitt einer mehrfach ummantelten optischen Faser (120), die einen Lichtführungskern (120a), der von mindestens einer weiteren Schicht eines Lichtführungsmantels (120b) um den Lichtführungskern (12) herum umgeben ist, und wobei der mindestens eine der mindestens zwei optischen Wege (120, 122) zur Zuführung des ersten Laserstrahls (L1) von der ersten Laserquelle (12) zu dem Laserkopf (20) einen optischen Schalter (128) umfasst, der zum Lenken des ersten Laserstrahls (L1) in den Kern (120a) oder in die mindestens eine weitere Schicht des Lichtführungsmantels (120b) der mehrfach ummantelten optischen Faser (120) ausgebildet ist.

4. Laserbearbeitungsvorrichtung (10) nach Anspruch 1, mit mindestens einer strahlformenden Beugungslinse (24), die ausgebildet ist zum Variieren einer Mode des Laserstrahls (L), d. h., zum selektiven Variieren einer Leistungsverteilung des Laserstrahls, der auf das Gebiet der Arbeitsfläche gelenkt wird.

5. Vorrichtung nach einem der vorhergehenden Ansprüche, wobei die mindestens zwei Laserquellen (12, 14), die sich voneinander unterscheiden, umfassen:
- eine erste Laserquelle (12), die zur Bereitstellung eines ersten Laserstrahls (L1) mit einer ersten Wellenlänge von 1070 nm ausgebildet ist; und
- eine zweite Laserquelle (14), die zur Bereitstellung eines zweiten Laserstrahls mit einer zweiten Wellenlänge von 532 nm ausgebildet ist.

6. Laserbearbeitungsvorrichtung (10) nach einem der vorhergehenden Ansprüche, wobei die Gruppe von Ausgabeeinheiten (40, 42, 44, 46) mindestens eine Ausgabeeinheit (40), die durch eine eigene Gelenkverbindung (41) gelenkig verstellbar ist, und ein Elektrokabel aufweist, das mit der Gelenkverbindung (41) und mit der Steuereinheit (30) verbunden ist, wobei die Steuereinheit (30) ausgebildet ist, einen Befehl an die mindestens eine gelenkig verstellbare Ausgabeeinheit (41) auszugeben, so dass diese eine erste Orientierung (β) einnimmt, wenn die Ausgabeeinheit (40) in der hervorstehenden Position ist, oder eine zweite Orientierung einnimmt, wenn die Ausgabeeinheit (40) in der zurückgezogenen Position ist, wobei:
- in der ersten Orientierung (β) die Ausgabeeinheit (40) einen Winkel mit einer optischen Achse (AO), mit der der Laserstrahl in Richtung auf das Gebiet der Arbeitsfläche (110) gelenkt wird, bildet; und
- in der zweiten Orientierung die Ausgabeeinheit (40) parallel in Bezug auf die optische Achse (AO) verläuft.

7. Laserbearbeitungsvorrichtung (10) nach Anspruch 6, wobei die mindestens eine gelenkig verstellbare Ausgabeeinheit (40) ein Formgedächtnismaterial an der Gelenkverbindung (41) aufweist, wobei das Formgedächtnismaterial dazu ausgebildet ist, eine erste Form (β) oder eine zweite Form als Funktion eines Stroms einzunehmen, der über das Elektrokabel der Gelenkverbindung zugeführt wird.

8. Laserbearbeitungsvorrichtung (10) nach Anspruch 1, wobei die Gruppe von Ausgabeeinheiten (40, 42, 44, 46) mindestens zwei Ausgabeeinheiten (40, 44) aufweist, die zum Lenken von Pulverstrahlen aus mindestens einem Material, vorzugsweise einem Metallpulver, ausgebildet und so festgelegt sind, dass sie einander zugewandt sind und von der Steuereinheit (30) so koordiniert gesteuert sind, dass mindestens ein Verarbeitungsmaterial auf das Gebiet einer Arbeitsfläche (110) derart gelenkt wird, dass es eine gleichmäßige Verteilung erhält.

9. Laserbearbeitungsvorrichtung (10) nach Anspruch 8, wobei die erste Ausgabeeinheit (42), die zweite Ausgabeeinheit (46) und die mindestens zwei Ausgabeeinheiten (40, 44), die ausgebildet sind, Pulverstrahlen mindestens eines Materials, vorzugsweise Metallpulver, zu lenken und die in der Gruppe von Ausgabeeinheiten (40, 42, 44, 46) einander zugewandt angeordnet sind, in einer Haltestruktur (50) in dem Laserkopf (20) derart montiert sind, dass die Eckpunkte eines gleichseitigen Rhombus, der seinen Mittelpunkt entsprechend zu einer Ausgangsöffnung (70) des Laserstrahls (LS) hat, derart gebildet werden, dass die räumliche Systemhöhe der Ausgabeeinheiten der Gruppe von Ausgabeeinheiten (40, 42, 44, 46) reduziert ist, ohne dass der Weg des Laserstrahls (LS), der aus dem Laserkopf (20) austritt, behindert ist.

10. Laserbearbeitungsvorrichtung nach einem der vorhergehenden Ansprüche, mit einer Einrichtung zur Zuführung eines Bearbeitungsgases, vorzugsweise eines Hilfsgases für das Laserschneiden, wobei die Zuführeinrichtung mit einem Anschlussteil (50b) des Laserkopfs (20) derart verbunden ist, dass das Bearbeitungsgas aus einer Ausgangsöffnung (70) des Laserstrahls (LS) austritt, wobei die Ausgangsöffnung (70) in dem Anschlussteil (50b) des Laserkopfs (20) angeordnet ist,
und wobei die mindestens eine Steuereinheit (30) mit der Zuführeinrichtung, die zum Zuführen des Hilfsgases ausgebildet ist, verbunden ist, wobei die Steuereinheit (30) ausgebildet ist, die Zuführeinrichtung entsprechend der zugeordneten und ausgewählten Art an Laserbearbeitung aus der Gruppe aus Arten von Laserbearbeitungen zu steuern.

11. Laserbearbeitungsvorrichtung nach einem der vorhergehenden Ansprüche, wobei die Gruppe von Arten von Laserbearbeitungen mindestens zwei Arten von Laserbearbeitungen, vorzugsweise zwei Arten von nicht-gleichzeitigen Bearbeitungen, die eine direkt abscheidende additive Herstellung mit einer ersten Art eines Bearbeitungsmaterials in Form eines Pulvers und mindestens eine der folgenden umfasst:
- additive Herstellung mit Direktabscheidung, in der eine zweite Art eines Verarbeitungsmaterials in Form von Pulver, das sich von demjenigen der ersten Art unterscheidet, verwendet wird;
- Abtragung;
- Drahtschweißung;
- Ummantelung;
- Wärmebehandlung; und
- Laserschneiden.

12. Laserbearbeitungsvorrichtung nach einem der vorhergehenden Ansprüche, die ferner ein dichroisches optisches Element (180) und einen optischen Sensor (182), vorzugsweise eine Kamera, aufweist, die entlang eines gemeinsamen Abschnitts der auswählbaren optischen Wege (16) angeordnet sind, wobei:
i) das dichroische optische Element (180) ausgebildet ist, einen Teil des Laserstrahls (L) abzuleiten, der sich in dem gemeinsamen Abschnitt in Richtung auf den optischen Sensor (182) ausbreitet; und
ii) der optische Sensor (182) ausgebildet ist, den Teil eines Laserstrahls, der von dem dichroischen optischen Element (180) abgeleitet wird, zu detektieren und der Steuereinheit (30) ein Signal (V) zuzuführen, das Messwerte von Parametern des Teils des Laserstrahls repräsentiert; und
iii) die Steuereinheit (30) mit dem optischen Sensor (182) verbunden und ausgebildet ist, die Laserquellen und/oder die orientierbaren optischen Komponenten (16) als Funktion des Messsignals (V), das von dem optischen Sensor (182) bereitgestellt wird, zu steuern.

13. Vorrichtung nach einem der vorhergehenden Ansprüche, wobei mindestens eine Ausgabeeinheit (40), die zum Lenken von Pulverstrahlen mindestens eines Materials ausgebildet ist, aufweist:
- eine Irismembran (480) mit einer Gruppe aus Lamellen, die in einem Drehring verstellt werden; und
- einen elektrischen Aktor, der mit dem Drehring verbunden und ausgebildet ist, die Ringmitte der Irismembran (480) zu drehen;
- die Steuereinheit (30), die mit dem elektrischen Aktor verbunden ist, der wiederum mit dem Drehring verbunden ist, und wobei die Steuereinheit ausgebildet ist, den elektrischen Aktor derart zu steuern, dass eine Fläche eines Aperturabschnitts der mindestens einen Ausgabeeinheit (40) in einer Richtung quer zu einer Richtung der Emission der Pulverstrahlen variiert wird derart, dass eine Durchflussrate der Pulverstrahlen variiert wird.

14. Laserbearbeitungsverfahren, mit:
- Bereitstellen einer Vorrichtung (1) nach einem der Ansprüche 1 bis 13; und
- Steuern der Gruppe von Ausgabeeinheiten (40, 42, 44, 46) derart, dass sie mindestens ein Verarbeitungsmaterial auf das Gebiet einer Arbeitsfläche (110) lenken, Auswählen, mittels der Steuereinheit (30), mindestens einer Ausgabeeinheit der Gruppe von Ausgabeeinheiten (40, 42, 44, 46) gemäß der zugeordneten und ausgewählten Art an Laserbearbeitung der Gruppe von Arten von Laserbearbeitungen, um ein entsprechendes Verarbeitungsmaterial auf das Gebiet einer Arbeitsfläche (110) gleichzeitig mit dem Lenken des Laserstrahls (L), der der Art der ausgewählten Laserbearbeitung zugeordnet ist, auf das Gebiet der Arbeitsfläche zu lenken.

15. Verfahren nach Anspruch 14, mit:
- Vorsehen einer Nachschlagtabelle in der Steuereinheit (30), mit der ein Satz von Parametern jeder Art von Laserbearbeitung, die aus der Gruppe von Arten von Laserbearbeitungen auswählbar ist, zuzuordnen ist, wobei die Gruppe von Parametern umfasst:
- einen Zustand einer Leistungsversorgung mindestens einer Laserquelle der mindestens zwei Laserquellen (12, 14), die sich voneinander unterscheiden und ausgebildet sind, entsprechende Laserstrahlen mit unterschiedlichen Wellenlängen bereitzustellen; und
- eine Orientierung mindestens einer orientierbaren optischen Komponente der Gruppe von orientierbaren optischen Komponenten (16); und
- einen Parameter zur Aktivierung der Ausgabe aus mindestens einer Ausgabeeinheit der Gruppe von Ausgabeeinheiten (40, 42, 44, 46).

16. Verfahren nach Anspruch 14 oder Anspruch 15, mit:
- Vorsehen einer Nachschlagtabelle in der Steuereinheit (30), mit der jeder Art an Laserbearbeitung, die aus der Gruppe von Arten von Laserbearbeitungen auswählbar ist, zuzuordnen ist mindestens ein weiterer Parameter aus:
- einer Position zwischen einer zurückgezogenen und einer hervorstehenden Ausgabeeinheit von einer oder mehreren Ausgabeeinheiten der Gruppe von Ausgabeeinheiten (40, 42, 44, 46); und
- eine Orientierung (β) einer oder mehrerer Ausgabeeinheiten aus der Gruppe von Ausgabeeinheiten (40, 42, 44, 46).

## Revendications

1. Appareil de traitement au laser (10), comprenant :
- au moins deux sources laser (12, 14), qui sont différentes l'une de l'autre et sont configurées pour fournir des faisceaux laser respectifs ayant des longueurs d'onde différentes l'une de l'autre,
- une tête laser (20), qui peut être utilisée en tant qu'outil d'extrémité d'une machine-outil laser (90) qui peut être configurée pour exécuter au moins un type d'opération de traitement au laser qui peut être sélectionné parmi un ensemble de types d'opérations de traitement au laser ;
- un ensemble de composants optiques orientables (16) de manière à fournir un ensemble de chemins optiques sélectionnables pour diriger un faisceau laser fourni par une source laser desdites au moins deux sources laser (12, 14) ; et
- une unité de commande (30) couplée auxdites au moins deux sources laser (12, 14), audit ensemble de composants optiques orientables (16) et à ladite tête laser (20) et configurée pour commander lesdites au moins deux sources laser (12, 14), ledit ensemble de composants optiques orientables (16) et ladite tête laser (20) selon le type d'opération de traitement au laser sélectionné parmi ledit ensemble de types d'opérations de traitement au laser de manière à exécuter le type d'opération de traitement au laser sélectionné, de manière à fournir et diriger un faisceau laser associé au type respectif d'opération de traitement sur une région d'une surface de travail (110),
ledit appareil de traitement au laser (10) étant **caractérisé en ce que** :
ladite tête laser (20) comprend un ensemble de buses (40, 42, 44, 46) configurées pour diriger au moins un matériau de traitement sur ladite région d'une surface de travail (110), ledit ensemble de buses (40, 42, 44, 46) comprenant au moins une buse (40) configurée pour diriger des jets de poudre d'au moins un matériau, de préférence de la poudre métallique, ainsi que comprenant au moins l'un des éléments suivants :
a) une première buse (42) configurée pour diriger un fil métallique sur ladite région d'une surface de travail, de préférence un fil métallique pour soudage laser ;
b) une seconde buse (46) configurée pour diriger un gaz d'assistance sur ladite région d'une surface de travail, de préférence un gaz d'assistance pour soudage laser,
et dans lequel ladite au moins une unité de commande (30) est couplée audit ensemble de buses (40, 42, 44, 46) et est configurée pour commander au moins une buse dudit ensemble de buses (40, 42, 44, 46) selon le type associé et sélectionné d'opération de traitement au laser dudit ensemble de types d'opérations de traitement au laser de manière à commander ladite au moins une buse de manière qu'elle dirige les matériaux de traitement respectifs sur ladite région d'une surface de travail (110) simultanément avec la direction dudit faisceau laser (L) associé au type d'opération de traitement au laser sélectionné sur ladite région de ladite surface de travail.
dans lequel :
- au moins une buse dudit ensemble de buses (40, 42, 44, 46) de la tête laser (20) est mobile entre une position en saillie et une position en retrait ; et
- ladite tête laser (20) comprend :
i) une cavité en retrait (50a) pour lesdites buses (40, 42, 44, 46) configurée pour loger lesdites buses dans ladite position en retrait ; et
ii) un ensemble d'actionneurs (470, 472, 474, 476) couplé audit ensemble de buses (40, 42, 44, 46) ; et
- ladite unité de commande (30) est couplée audit ensemble d'actionneurs (470, 472, 474, 476) et est configurée pour commander ledit ensemble d'actionneurs (470, 472, 474, 476) pour déplacer lesdites buses entre ladite position en saillie et ladite position en retrait selon le type d'opération de traitement au laser sélectionné parmi l'ensemble de types sélectionnables d'opérations de traitement au laser.

2. Appareil de traitement au laser (10) selon la revendication 1, dans lequel :
- ledit ensemble de chemins optiques sélectionnables comprend au moins deux chemins optiques (120, 122) pour fournir un premier faisceau laser (L1) d'une première source laser (12) à ladite tête laser (20) ; et/ou
- au moins deux opérations de traitement, de préférence deux opérations de traitement non simultanées, dans ledit ensemble de types d'opérations de traitement au laser sont associées à au moins une buse respective de l'ensemble de buses (40, 42, 44, 46).

3. Appareil de traitement au laser selon la revendication 2, dans lequel au moins une partie (120) d'au moins un desdits au moins deux chemins optiques (120, 122) permettant de fournir ledit premier faisceau laser (L1) de ladite première source laser (12) à ladite tête laser (20) comprend un tronçon de fibre optique multi-gaine (120), qui comprend un noyau de guide de lumière (120a) entouré par au moins une couche supplémentaire de gainage de guide de lumière (120b) autour dudit noyau de guide de lumière (12), et dans lequel ledit au moins un desdits au moins deux chemins optiques (120, 122) permettant de fournir ledit premier faisceau laser (L1) de ladite première source laser (12) à ladite tête laser (20) comprend un commutateur optique (128) configuré pour diriger ledit premier faisceau laser (L1), en variante, dans le noyau (120a) ou dans l'au moins une couche supplémentaire de gainage de guide de lumière (120b) de ladite fibre optique multi-gaine (120).

4. Appareil de traitement au laser (10) selon la revendication 1, comprenant au moins une lentille de diffraction de formation de faisceau (24) configurée pour faire varier un mode du faisceau laser (L), à savoir configurée pour faire varier de manière sélective une distribution d'énergie du faisceau laser dirigé sur la région de la surface de travail.

5. Appareil selon l'une quelconque des revendications précédentes, dans lequel lesdites au moins deux sources laser (12, 14) différentes l'une de l'autre comprennent :
- une première source laser (12) configurée pour fournir un premier faisceau laser (L1) ayant une première longueur d'onde de 1070 nm ; et
- une seconde source laser (14) configurée pour fournir un second faisceau laser ayant une seconde longueur d'onde de 532 nm.

6. Appareil de traitement au laser (10) selon l'une quelconque des revendications précédentes, dans lequel ledit ensemble de buses (40, 42, 44, 46) comprend au moins une buse (40) qui peut être articulée autour d'une articulation (41) propre et un câble électrique couplé à ladite articulation (41) propre et à ladite unité de commande (30), dans lequel ladite unité de commande (30) est configurée pour émettre un ordre vers ladite au moins une buse articulée (40) pour qu'elle prenne une première orientation (β) lorsque ladite buse (40) est dans ladite position en saillie ou une seconde orientation lorsque ladite buse (40) est dans ladite position en retrait, dans lequel :
- dans ladite première orientation (β) ladite buse (40) forme un angle avec un axe optique (AO) selon lequel ledit faisceau laser est dirigé vers ladite région de ladite surface de travail (110) ; et
- dans ladite seconde orientation ladite buse (40) est parallèle par rapport audit axe optique (AO).

7. Appareil de traitement au laser (10) selon la revendication 6, dans lequel ladite au moins une buse articulée (40) comprend un matériau à mémoire de forme au niveau dudit joint articulé (41), ledit matériau à mémoire de forme étant configuré pour prendre en variante une première forme (β) ou une seconde forme, en fonction d'un courant appliqué audit joint articulé via ledit câble électrique.

8. Appareil de traitement au laser (10) selon la revendication 1, dans lequel ledit ensemble de buses (40, 42, 44, 46) comprend au moins deux buses (40, 44) configurées pour diriger des jets de poudre d'au moins un matériau, de préférence de la poudre métallique, qui sont placées l'une en face de l'autre et sont commandées de manière coordonnée par ladite unité de commande (30) de manière à diriger au moins un matériau de traitement sur ladite région d'une surface de travail (110) de telle manière qu'il soit distribué uniformément.

9. Appareil de traitement au laser (10) selon la revendication 8, dans lequel ladite première buse (42), ladite seconde buse (46) et lesdites au moins deux buses (40, 44), qui sont configurées pour diriger des jets de poudre d'au moins un matériau, de préférence de la poudre métallique, et sont placées l'une en face de l'autre dans ledit ensemble de buses (40, 42, 44, 46) sont assemblées dans une structure de support (50) dans la tête laser (20) de manière à former les sommets d'un rhombe équilatéral dont le centre correspond à un trou de sortie (70) du faisceau laser (LS) de manière à réduire l'encombrement dans l'espace des buses de l'ensemble de buses (40, 42, 44, 46), sans obstruer le chemin du faisceau laser (LS) quittant ladite tête laser (20).

10. Appareil de traitement au laser selon l'une quelconque des revendications précédentes, comprenant un dispositif pour fournir un gaz de support, de préférence un gaz d'assistance pour la découpe au laser, ledit dispositif de fourniture étant couplé à une pièce terminale (50b) de ladite tête laser (20) de telle manière que ledit gaz de support sorte d'un trou de sortie (70) du faisceau laser (LS), le trou de sortie (70) étant situé dans ladite pièce terminale (50b) de la tête laser (20),
et dans lequel ladite au moins une unité de commande (30) est couplée audit dispositif de fourniture configuré de manière à fournir ledit gaz d'assistance, ladite unité de commande (30) étant configurée pour commander ledit dispositif de fourniture selon le type associé et sélectionné d'opération de traitement au laser dudit ensemble de types d'opérations de traitement au laser.

11. Appareil de traitement au laser selon l'une quelconque des revendications précédentes, dans lequel ledit ensemble de types d'opérations de traitement au laser comprend au moins deux types d'opérations de traitement au laser, de préférence deux types d'opérations de traitement non simultanées, comprenant la fabrication additive par dépôt direct avec un premier type de matériau de traitement sous la forme de poudre et au moins l'un des éléments suivants :
- fabrication additive par dépôt direct, qui utilise un second type de matériau de traitement sous la forme de poudre différent du premier ;
- ablation ;
- soudage par fil ;
- gainage ;
- traitement thermique ; et
- découpe au laser.

12. Appareil de traitement au laser selon l'une quelconque des revendications précédentes, comprenant en outre un élément optique dichroïque (180) et un capteur optique (182), de préférence une caméra, qui sont placés le long d'un tronçon commun desdits chemins optiques sélectionnables (16), dans lequel :
i) ledit élément optique dichroïque (180) est configuré pour dévier une partie dudit faisceau laser (L) qui se propage dans ledit tronçon commun vers ledit capteur optique (182) ; et
ii) ledit capteur optique (182) est configuré pour détecter ladite partie du faisceau laser déviée par ledit élément optique dichroïque (180) et pour fournir à l'unité de commande (30) un signal (V) représentant des mesures de paramètres de ladite partie de faisceau laser ; et
iii) ladite une unité de commande (30) est couplée audit capteur optique (182) et est configurée pour commander lesdites sources laser et/ou lesdits composants optiques orientables (16) en fonction dudit signal de mesure (V) fourni par ledit capteur optique (182).

13. Appareil selon l'une quelconque des revendications précédentes, dans lequel au moins une buse (40) configurée pour diriger des jets de poudre d'au moins un matériau comprend :
- un diaphragme-iris (480), comprenant un ensemble de lames pivotantes dans un anneau rotatif ; et
- un actionneur électrique couplé audit anneau rotatif et configuré pour faire tourner ledit écrou annulaire du diaphragme-iris (480) ;
- ladite unité de commande (30) étant couplée audit actionneur électrique, qui est à son tour couplé audit anneau rotatif, et étant configurée pour commander ledit actionneur électrique de manière à faire varier une zone d'une section d'ouverture de ladite au moins une buse (40) dans une direction transversale à une direction d'émission desdits jets de poudre de manière à faire varier un débit desdits jets de poudre.

14. Procédé de traitement au laser, comprenant :
- la fourniture d'un appareil (10) selon l'une quelconque des revendications 1 à 13 ; et
- la commande dudit ensemble de buses (40, 42, 44, 46) de manière qu'elles dirigent au moins un matériau de traitement sur ladite région d'une surface de travail (110), la sélection, via ladite unité de commande (30), d'au moins une buse dudit ensemble de buses (40, 42, 44, 46) selon le type associé et sélectionné d'opération de traitement au laser dudit ensemble de types d'opérations de traitement au laser, pour diriger un matériau de traitement respectif sur ladite région d'une surface de travail (110) simultanément avec la direction dudit faisceau laser (L) associé au type d'opération de traitement au laser sélectionné sur ladite région de ladite surface de travail.

15. Procédé selon la revendication 14, comprenant :
- le fait de fournir à ladite unité de commande (30) une table de consultation permettant d'associer un ensemble de paramètres à chaque type d'opération de traitement au laser qui peut être sélectionné parmi ledit ensemble de types d'opérations de traitement au laser, l'ensemble de paramètres comprenant :
- un état d'alimentation électrique d'au moins une source laser desdites deux sources laser (12, 14), qui sont différentes l'une de l'autre et sont configurées pour fournir des faisceaux laser respectifs ayant des longueurs d'onde différentes l'une de l'autre ; et
- une orientation d'au moins un composant optique orientable dudit ensemble de composants optiques orientables (16) ; et
- un paramètre pour l'activation d'émission d'au moins une buse dudit ensemble de buses (40, 42, 44, 46).

16. Procédé selon la revendication 14 ou la revendication 15, comprenant :
- le fait de fournir à ladite unité de commande (30) une table de consultation permettant d'associer, à chaque type d'opération de traitement au laser qui peut être sélectionné parmi ledit ensemble de types d'opérations de traitement au laser, au moins un paramètre supplémentaire parmi :
- une position entre rétractée et en saillie d'une ou plusieurs buses dudit ensemble de buses (40, 42, 44, 46) ; et
- une orientation (β) d'une ou plusieurs buses dudit ensemble de buses (40, 42, 44, 46).
